# EUROPEAN PATENT SPECIFICATION

(11) **EP 2 520 175 B1**
(45) Date of publication and mention of the grant of the patent: **15.03.2017**
(21) Application number: 09852764.1
(22) Date of filing: 29.12.2009
(51) Int. Cl.: A23D 9/007, A23D 9/013

(54) **FATTY COMPOSITION THAT REDUCES THE FORMATION OF FROST ON FROZEN, PRE-FRIED FOOD PRODUCTS**
FETTZUSAMMENSETZUNG ZUR VERRINGERUNG DER FROSTBILDUNG AUF TIEFGEFRORENEN VORFRITTIERTEN LEBENSMITTELPRODUKTEN
COMPOSITION GRASSE QUI RÉDUIT LA FORMATION D'ÉCUME DANS DES ALIMENTS PRÉFRITS ET CONGELÉS

(43) Date of publication of application: 07.11.2012
(73) Proprietor: Team Foods Colombia S.a., 1 Bogotá (CO)
(72) Inventor: DAZA LEGUIZAMÒN, Fredy Leonardo, Bogotà (CO)
(74) Representative: Matthews, Derek Peter
(86) International application number: PCT/IB2009/007902
(87) International publication number: WO 2011/080528

(56) References cited:
- WO-A1-00/30472
- JP-A- 10 179 027
- US-A- 4 399 165
- US-A- 4 786 516
- US-A- 6 042 870
- US-A1- 2001 024 672
- US-A1- 2003 026 887
- US-A1- 2005 123 666
- US-A1- 2005 214 435
- US-A1- 2006 134 293
- CUESTA, C. ET AL.: 'Fatty Acid Changes in High Oleic Acid Sunflower Oil During Successive Deep- Fat Fryings of Frozen Foods' FOOD SCIENCE AND TECHNOLOGY INTERNATIONAL vol. 7, no. 4, 2001, pages 317 - 328, XP008168443
- AGUILERA, J.M. ET AL.: 'Oil Absorption During Frying of Frozen Parfried Potatoes' JOURNAL OF FOOD SCIENCE vol. 65, no. 3, 2000, pages 476 - 479, XP055108094

## Description

### FIELD OF THE INVENTION

The present invention relates to a composition for processing frozen, pre-fried food products employed in a pre-frying stage to reduce the formation of frost on said frozen, pre-fried products.

### BACKGROUND OF THE INVENTION

In the state of the art processes of obtainment are known of frozen, pre-fried food products, in particular French fries, yucca, plantain and other preparations including stages of selection, washing, peeling, cutting, blanching, drying, pre-frying, cooling, individual quick freezing (IQF), packaging and storage.

Frozen, pre-fried products contain free water which consequent upon a break in the cold chain passes into the liquid state and on the product being refrozen, such water reverts to the solid state in the form of frost around the frozen, pre-fried food product.

For the consumer, excess frost on the frozen, pre-fried product confers the sensation of a product having been stored for a long period (not fresh), moreover frost generates agglomeration of the product within the packaging thereof preventing the consumer from being able to portion it at the moment of utilization thereof, causing the rupture of said food product. Furthermore, during the shallow or fry pan frying stage the excess frost generated occasions a powerful thermal shock with the hot oil causing oil splashes. Such splashing may generate accidents for the handler of the food product being fried together with loss of the oil utilized and dirtiness in the area wherein the frying operation is realized.

The use is widely known of emulsifiers in conjunction with fatty compositions, water and other ingredients wherein such emulsifiers are utilized to form the emulsion. In other cases the emulsifier has been used with the objective of conferring functional properties, such as aerating agent in baking and other industrial applications. Thus said emulsifiers have been basically used in the known application thereof to form emulsions.

EP 1958518 relates to a process of preparation of French fries or tubers including the stages of blanching, vacuum pre-frying and freezing or pre-frying at atmospheric pressure together with another stage of vacuum pre-frying and freezing with the objective of obtaining a final quick-fry product.

US 4590080 describes a process for preparing frozen, pre-fried potatoes including two pre-frying stages with an intermediate cooling stage, wherein the final product presents high-quality characteristics of flavor, odor and texture on being fried or baked.

Moreover, documents are known relating to improvements in pre-frying and freezing stages to obtain products which on being baked in traditional and microwave ovens have characteristics in a sensorial sense similar to a frozen, pre-fried product having been subsequently fried in oil.

In conformity with the foregoing the need subsists in the state of the art for pre-frying fats to prevent the formation of frost on products which have been subjected to said pre-fry process and subsequently affected by an interruption in the cold chain.

US 2005/0214435 discloses an oil composition for use in food products such as sponge cakes and cereal bars, whilst US 2003/0026887 discloses a water-in-oil emulsion for use as a frying or boiling fat.

US 4786516 discloses a method of drying raw meat including deep frying the meat in an oil composition under vacuum.

US 2001/0024672 and US 6042870 disclose methods of preparing frozen fried products.

US 2005/0123666 discloses an aerated frozen confection in which an emulsifier has been used to facilitate formation and stabilization of fat alpha crystals.

### BRIEF SUMMARY OF THE INVENTION

The present invention relates to a fatty composition applied in a pre-frying stage to reduce the formation of frost. The invention is defined in the appended claims.

### BRIEF DESCRIPTION OF THE DRAWINGS

The following drawings have the intention of being explanatory and not limitative of the present invention, viz :
Fig. 1. This figure corresponds to a photograph wherein is shown the reduction in frost.
Fig. 2. This figure corresponds to a photograph wherein is shown the potatoes sticking together to a lesser degree.
Fig. 3. This figure corresponds to a photograph wherein is shown the reduction in splashing in shallow or fry pan frying.
Fig. 4. This figure corresponds to a graph showing that there is no difference from the fats of the state of the art, firstly providing a rating of the quality of the potatoes and then providing the odor and flavor profile of the same produced by a panel.

### DETAILED DESCRIPTION OF THE INVENTION

The present invention provides an edible fatty composition that reduces the formation of frost on food products which have been subjected to a pre-frying stage and which subsequent to freezing may experience an interruption in the cold chain.

In a surprising manner, it has been found that applying the fatty composition of the present invention in the pre-frying process, a possible interruption of the cold chain following freezing leads to a reduction in the generation of frost through the effect of thawing the water belonging to the frozen, pre-fried food product.

The edible fatty composition that reduces the formation of frost of the present invention comprises a mixture of vegetable oils, emulsifiers and antioxidants.

The vegetable oils utilized for the fatty composition of the invention are selected from among palm oil, fractions of palm oil, sunflower oil, high oleic sunflower oil, soya oil, olive oil, maize oil, canola oil, sesame oil and safflower oil or mixtures of the foregoing.

The composition of the invention utilizes emulsifiers selected from among distilled mono- and diglycerides, lecithin, citric, tartaric or lactic acid esters, sorbitan esters, or mixtures thereof. This composition furthermore utilizes antioxidants selected from among tert-butylhydroquinone and butylhydroxytoluene or mixtures thereof.

The function of the emulsifiers of the present invention differs notably from the application given to said emulsifiers until the present in the state of the art. Employment of said emulsifiers in conformity with the knowledge of the state of the art has been limited to the formation of emulsions or to confer functional properties of texture in applications of baking and others such as, for example, ice cream production.

Nevertheless, the inventors of the present invention have found in a surprising manner that the application of the edible fatty composition of the present invention in the pre-frying stage notably reduces the formation of frost. Such frost affects the final product by virtue of the fact that it creates a negative perception in the final consumer through conferring the aspect of a product which is not fresh, furthermore rendering difficult the portioning of said frozen product because it sticks together as a result of the frost and on attempting to divide the frozen block the food product may fragment, rendering it less attractive. Finally, a further difficulty generated by this phenomenon is splashing which occurs when said product is subjected to shallow or fry pan frying, occasioning the latent risk of the handler being burnt, in addition to the dirtiness generated on the stove and in the area wherein frying is realized.

As a consequence thereof, to resolve this problem there has been developed the edible fatty composition of the present invention that reduces the formation of frost, which same contains a vegetable oil or mixture of vegetable oils lying in a range between 93 and 99.85 % by weight, and more preferably between 96 and 99.75 % by weight.

Moreover, the edible fat of the present invention possesses a percentage of emulsifier lying between 0.15 and 0.45 % by weight, preferably between 0.20 and 0.40 % by weight, and more preferably between 0.25 and 0.35 % by weight. Furthermore, this fat possesses a percentage of antioxidant lying between 0.01 and 0.02 % by weight.

In a preferred embodiment of the invention the oil utilized is palm oil and/or fractions thereof.

As has been mentioned at the commencement, the principal use of the composition of the invention is for the preparation of frozen, pre-fried food products, more particularly the composition of the invention is utilized for the preparation of French fries.

### Example.

500 g of potatoes of variety R12 which had been previously selected, washed, peeled, cut, blanched and dried were taken to carry out a pre-frying stage in deep frying equipment of Pallomaro brand, ref. Electric Fryer, model EF171, having a capacity of 7 kg and dimensions of 325 x 290 x 360 mm, utilizing 7 kg of standard shortening (palm oil and fractions thereof in origin), and in another unit identical to the foregoing there were processed a further 500 grams of potatoes of variety R12 utilizing the oil of the invention produced from palm oil and fractions thereof.

In both cases the pre-frying period was of 60 seconds, the potatoes were then allowed to cool to ambient temperature during approximately 10 minutes and were subsequently frozen in a Hyber brand ultrafreezer unit, model APM606S, voltage 230 V, frequency 60 Hz, power 1100 W, at a temperature of -29°C during 300 s. The potatoes were then stored in said unit during 72 hours at temperatures of between -19 and -29°. They were then removed from this unit and left at ambient temperature during one hour. At the end of the hour the potatoes were stored in the freezer compartment of a Challenger brand Fresh Master domestic refrigerator of 9 cubic feet during one week. At the end of the week the potatoes were removed and the generation of frost and agglomeration or sticking together of the potatoes was compared. Furthermore, splashing measurement tests were realized, preheating 150 g of palm olein at 180 °C in a fry pan of 24 cm diameter and frying thereupon 100 g of potatoes. Measurement of splashing was carried out through placing over the fry pan absorbent and/or Kraft paper previously dried in a hermetically sealed desiccator with 1000 g of adsorbent material during 12 hours, this paper being affixed to a framework of 30 cm in diameter; following frying the quantity of oil having fallen on said paper during the first 30 s of frying as a result of splashing was evaluated. The potatoes were evaluated sensorially by a panel, whereby the color, odor, flavor and texture of the processed potatoes were evaluated.

Furthermore, the standard shortening (palm oil and fractions thereof in origin) and the oil of the invention were evaluated following a period of 8 hours pre-frying wherein were measured the parameters of free acidity expressed as a % of oleic fatty acid (method reference AOCS Ca 5a-40), peroxide value expressed as meq O₂/kg (method reference AOCS Cd 8-53), smoke point expressed in °C (method reference AOCS Cc 9a-48), and polar compounds expressed as a % of polar compounds utilizing a portable polar compounds meter, Ebro brand, model FOM310.

This process was realized for the potatoes both pre-fried with the fatty composition of the state of the art and with the fatty composition object of the present invention.

Less generation of frost was observed as was less agglomeration of the potatoes pre-fried with the oil of the invention, when compared with the standard shortening.

In shallow frying, a smaller range of splashing was found of from 20 to 69 % by weight of the potatoes pre-fried with the oil of the invention when compared with the standard oil. Finally, no significant difference was found in the parameters of color, odor, flavor and texture of the potatoes pre-fried with the oil of the invention when compared with the standard oil.

Physicochemical results of the oils subsequent to pre-frying for 8 hours.

| **Analysis** | **Standard shortening** | **Oil of the invention** |
|---|---|---|
| Free acidity (% oleic) | 0.04 | 0.04 |
| Peroxide value (meq O₂/kg) | 6.08 | 3.41 |
| Polar compounds (%) | 5.0 | 4.0 |
| Smoke point (°C) | 245 | 240 |

From the table it may be observed that the values obtained do not present significant differences between the standard shortening and the oil of the invention, it furthermore being observed that the oils lie within parameters of good quality.

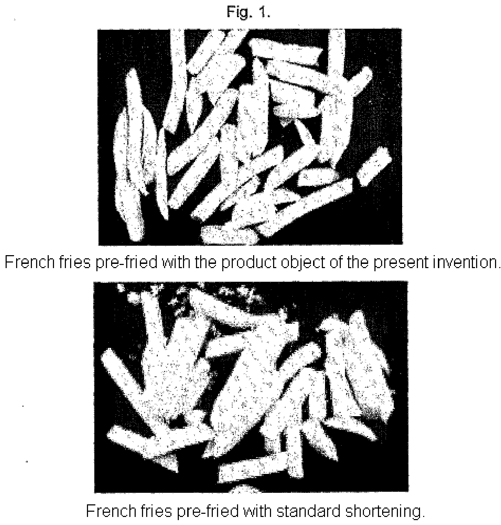

Figure 1 shows photographs demonstrating the reduction in frost utilizing the fatty composition of the present invention. In the first photograph there appear potatoes pre-fried with the composition of the present invention demonstrating much less frost than in the second photograph and, moreover, showing how these potatoes stick together less than those pre-fried with a product of the state of the art.

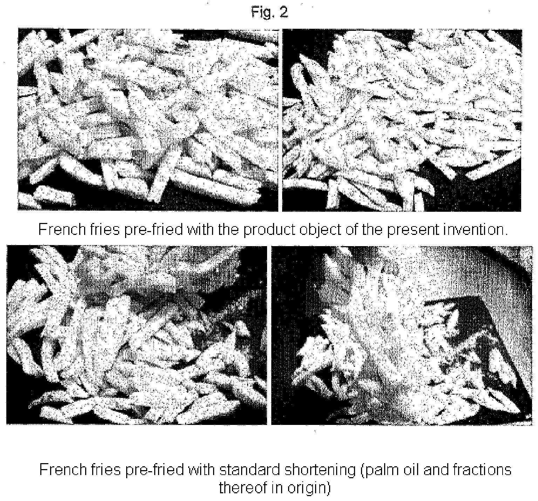

Figure 2 shows photographs wherein the lesser adhesion of the potatoes in the upper photograph may be observed much more clearly on utilizing the fatty composition of the present invention for pre-frying in comparison with the pre-frying fat of the state of the art (lower photograph) wherein the greater sticking together of the said potatoes is clear.

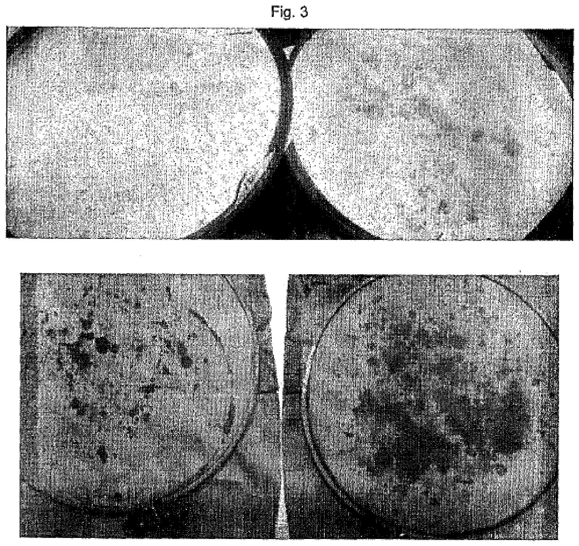

Figure 3 shows a test whereby it is desired to demonstrate the splashing characteristics of the fatty composition for pre-frying of the present invention in comparison with the fatty composition of the state of the art. In the upper photograph it may be seen how the area covered by fat is much smaller than the area observed in the second photograph, clearly demonstrating how the fat of the present invention has much greater anti-splash properties than those presented by the fatty composition of the state of the art.

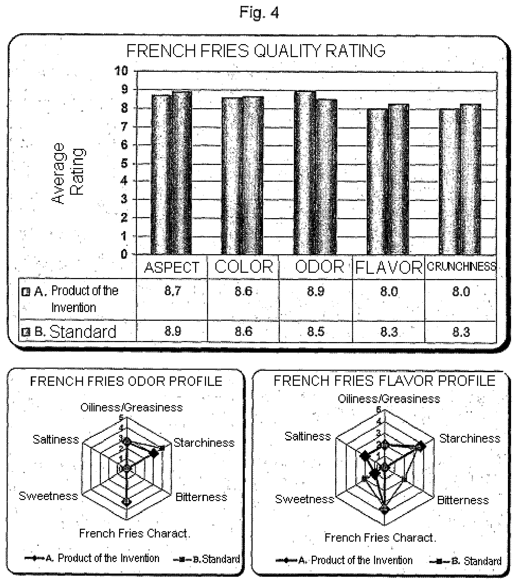

Finally, figure 4 corresponds to a graph showing that there is no difference from the fats of the state of the art, showing firstly a rating of the quality of the potatoes and then showing the odor and flavor profile of the same realized by a panel.

## Claims

1. Fatty composition that reduces the formation of frost, comprising a mixture of vegetable oils, emulsifiers and antioxidants:
wherein the oils are selected from among palm oil, fractions of palm oil, sunflower oil, high oleic sunflower oil, soya oil, olive oil, maize oil, canola oil, sesame oil and safflower oil or mixtures of the foregoing and comprise between 93 and 99.85 % by weight of the composition;
and wherein the antioxidants are selected from among tert-butylhydroquinone and butylhydroxytoluene or mixtures thereof;
**characterized in that** the emulsifiers are selected from among distilled mono- and di-glycerides, lecithin, citric, tartaric or lactic acid esters, sorbitan esters or mixtures thereof and comprise between 0.15 and 0.45 % by weight of the composition.

2. The edible fatty composition that reduces the formation of frost as claimed in claim 1, **characterized in that** the vegetable oil or mixture of vegetable oils comprises between 96 and 99.75 % by weight.

3. The edible fatty composition that reduces the formation of frost as claimed in claim 1, **characterized in that** the percentage by weight of emulsifiers lies between 0.20 and 0.40 % by weight.

4. The edible fatty composition that reduces the formation of frost as claimed in claim 1, **characterized in that** the percentage by weight of emulsifiers lies between 0.25 and 0.35 % by weight.

5. The edible fatty composition that reduces the formation of frost as claimed in claim 1, **characterized in that** the percentage of antioxidant lies between 0.01 and 0.02 % by weight.

6. The edible fatty composition that reduces the formation of frost as claimed in claim 1, **characterized in that** the vegetable oil is preferably palm oil and/or fractions thereof.

7. Use of the edible fatty composition that reduces the formation of frost as claimed in any of the foregoing claims for the preparation of frozen, pre-fried food products.

8. Use as claimed in claim 7 wherein the frozen, pre-fried food products are French fries.

## Patentansprüche

1. Fettzusammensetzung, die die Bildung von Frost verringert, umfassend eine Mischung von pflanzlichen Ölen, Emulgatoren und Antioxidantien:
- Wobei die Öle ausgewählt sind aus Palmöl, Fraktionen von Palmöl, Sonnenblumenöl, ölsäurereiches Sonnenblumenöl, Sojaöl, Olivenöl, Maisöl, Rapsöl, Sesamöl und Distelöl oder Mischungen der Vorgenannten und zwischen 93 und 99,85 Gewichts% der Zusammensetzung umfassen;
- Und wobei die Antioxidantien ausgewählt sind aus tert-Butylhydrochinon und Butylhydroxytoluol oder Mischungen hiervon;
- **Dadurch gekennzeichnet, dass** die Emulgatoren ausgewählt sind aus destillierten Mono- und Di-Glyceriden, Lecithin, Zitronen-, Wein-, oder Milchsäureestern, Sorbitanestern oder Mischungen hiervon und zwischen 0,15 und 0,45 Gewichts% der Zusammensetzung umfassen.

2. Verzehrbare Fettzusammensetzung, die die Bildung von Frost verringert, nach Anspruch 1, **dadurch gekennzeichnet, dass** das pflanzliche Öl oder die Mischung von pflanzlichen Ölen zwischen 96 und 99,75 Gewichts% umfasst.

3. Verzehrbare Fettzusammensetzung, die die Bildung von Frost verringert, nach Anspruch 1, **dadurch gekennzeichnet, dass** der Gewichtsprozentsatz von Emulgatoren zwischen 0,20 und 0,40 Gewichts% liegt.

4. Verzehrbare Fettzusammensetzung, die die Bildung von Frost verringert, nach Anspruch 1, **dadurch gekennzeichnet, dass** der Gewichtsprozentsatz von Emulgatoren zwischen 0,25 und 0,35 Gewichts% liegt.

5. Verzehrbare Fettzusammensetzung, die die Bildung von Frost verringert, nach Anspruch 1, **dadurch gekennzeichnet, dass** der Gewichtsprozentsatz von Antioxidantien zwischen 0,01 und 0,02 Gewichts% liegt.

6. Verzehrbare Fettzusammensetzung , die die Bildung von Frost verringert, nach Anspruch 1, **dadurch gekennzeichnet, dass** das pflanzliche Öl vorzugsweise Palmöl und/oder Fraktionen hiervon ist.

7. Verwendung der verzehrbaren Fettzusammensetzung, die die Bildung von Frost verringert, nach einem der vorhergehenden Ansprüche für die Zubereitung von gefrorenen, vorfrittierten Lebensmittelprodukten.

8. Verwendung nach Anspruch 7, wobei die gefrorenen, vorfrittierten Lebensmittelprodukte Pommes frites sind.

## Revendications

1. Composition grasse qui réduit la formation de givre, comprenant un mélange d'huiles végétales, d'émulsifiants et d'antioxydants :
dans laquelle les huiles sont choisies parmi l'huile de palme, des fractions d'huile de palme, l'huile de tournesol, l'huile de tournesol hautement oléique, l'huile de soja, l'huile d'olive, l'huile de maïs, l'huile de colza, l'huile de sésame et l'huile de carthame, ou des mélanges des huiles mentionnées ci-dessus et comprennent entre 93 et 99,85 % en poids de la composition ;
et dans laquelle les antioxydants sont choisis parmi la tert-butylhydroquinone et le butylhydroxytoluène, ou leurs mélanges ;
**caractérisée en ce que** les émulsifiants sont choisis parmi des monoglycérides et des diglycérides distillés, la lécithine, des esters d'acide citrique, d'acide tartrique ou d'acide lactique, des esters de sorbitanne, ou leurs mélanges, et comprennent entre 0,15 et 0,45 % en poids de la composition.

2. Composition grasse comestible qui réduit la formation de givre selon la revendication 1, **caractérisée en ce que** l'huile végétale ou un mélange d'huiles végétales comprend entre 96 et 99,75 % en poids.

3. Composition grasse comestible qui réduit la formation de givre selon la revendication 1, **caractérisée en ce que** le pourcentage en poids des émulsifiants se situe entre 0,20 et 0,40 % en poids.

4. Composition grasse comestible qui réduit la formation de givre selon la revendication 1, **caractérisée en ce que** le pourcentage en poids des émulsifiants se situe entre 0,25 et 0,35 % en poids.

5. Composition grasse comestible qui réduit la formation de givre selon la revendication 1, **caractérisée en ce que** le pourcentage d'antioxydant se situe entre 0,01 et 0,02 % en poids.

6. Composition grasse comestible qui réduit la formation de givre selon la revendication 1, **caractérisée en ce que** l'huile végétale est de préférence de l'huile de palme et/ou des fractions de cette dernière.

7. Utilisation de la composition grasse comestible qui réduit la formation de givre selon l'une quelconque des revendications précédentes, pour la préparation de produits alimentaires congelés préfrits.

8. Utilisation selon la revendication 7, dans laquelle les produits alimentaires congelés préfrits sont des pommes de terre frites.
